# EUROPÄISCHE PATENTANMELDUNG

(11) **EP 2 835 782 A1**
(43) Veröffentlichungstag der Anmeldung: **11.02.2015**
(21) Anmeldenummer: 13179395.2
(22) Anmeldetag: 06.08.2013
(51) Int. Cl.: G06Q 90/00, G06K 7/00

(54) **Verfahren und System zur Bereitstellung von standortbezogenen Dienstleistungen**

(71) Anmelder: SKIDATA AG, 5083 Grödig/Salzburg (AT)
(72) Erfinder: Lindig, Clemens, AT- 5083 Grödig/Salzburg (AT); Schlechter, Thomas, AT- 5083 Grödig/Salzburg (AT); Clemente, Jorge, AT- 5083 Grödig/Salzburg (AT); Surkau, Reinhard, AT- 5083 Grödig/Salzburg (AT)
(74) Vertreter: Karakatsanis, Georgios

(57) **Zusammenfassung**

Es wird ein Verfahren zur Bereitstellung von standortbezogenen Dienstleistungen vorgeschlagen, im Rahmen dessen die Ermittlung der Berechtigung einer Person zur Beanspruchung der standortbezogenen Dienstleistungen anhand der berührungslosen Erfassung und Auswertung einer Medieninformation eines Kundenmediums erfolgt, wobei anhand der Erfassung des Kundenmediums eine Lokalisierung des Kundenmediums durchgeführt wird und wobei die Medieninformation des Kundenmediums anhand einer automatisch durchführbaren berührungslosen Interaktion zwischen zumindest einer einem Standort zugeordneten und mit einem Rechner verbundenen Leseeinrichtung und dem Kundenmedium erfasst wird, wenn sich das Kundenmedium in Reichweite der zumindest einen Leseeinrichtung befindet, wobei das Kundenmedium einen RF-Transceiver umfasst und mit dem Rechner über die zumindest eine Leseeinrichtung in einem vorgegebenen Frequenzbereich kommuniziert, wobei für den Fall einer gültigen Berechtigung standortbezogene Dienstleistungen zur Verfügung gestellt werden, deren Bereitstellung von der Erfassung des Kundenmediums durch zumindest eine dem Standort zugeordnete Leseeinrichtung abhängt und wobei das Kundenmedium von einem Rechner über die zumindest eine Leseeinrichtung derart gesteuert wird, dass der Energieverbrauch des Kundenmediums minimiert wird.

## Beschreibung

Die vorliegende Erfindung bezieht sich auf ein Verfahren zur Bereitstellung von standortbezogenen Dienstleistungen gemäß dem Oberbegriff des Patentanspruchs 1. Des Weiteren bezieht sich die Erfindung auf ein System zur Bereitstellung von standortbezogenen Dienstleistungen, insbesondere auf ein System zur Durchführung des erfindungsgemäßen Verfahrens.

Der vorliegenden Erfindung liegt die Aufgabe zugrunde, ein Verfahren zur Bereitstellung von standortbezogenen Dienstleistungen anzugeben, durch dessen Durchführung die Ermittlung der Berechtigung zur Beanspruchung der standortbezogenen Dienstleistungen und die Bereitstellung der Dienstleistungen auf einfache Weise mit hoher räumlicher Genauigkeit und ohne eine Aktion seitens der Person, welche die Dienstleistungen beanspruchen möchte, erfolgen. Zudem soll der Energieverbrauch bei der Durchführung des Verfahrens minimiert werden.

Diese Aufgabe wird durch die Merkmale des Patentanspruchs 1 gelöst.

Ferner soll ein System zur Bereitstellung von standortbezogenen Dienstleistungen angegeben werden, insbesondere ein System zur Durchführung des erfindungsgemäßen Verfahrens, welches einfach aufgebaut ist und mit geringem konstruktiven Aufwand die Ermittlung der Berechtigung zur Beanspruchung der standortbezogenen Dienstleistungen ermöglicht. Zudem soll das erfindungsgemäße System einen geringen Energieverbrauch aufweisen. Das erfindungsgemäße System ist Gegenstand des Patentanspruchs 13.

Demnach wird ein Verfahren zur Bereitstellung von standortbezogenen Dienstleistungen vorgeschlagen, im Rahmen dessen die Ermittlung der Berechtigung einer Person zur Beanspruchung der standortbezogenen Dienstleistungen anhand der berührungslosen Erfassung und Auswertung einer Medieninformation eines Kundenmediums erfolgt, wobei anhand der Erfassung des Kundenmediums eine Lokalisierung des Kundenmediums durchgeführt wird und wobei die Medieninformation des Kundenmediums anhand einer automatisch durchführbaren berührungslosen Interaktion zwischen zumindest einer einem Standort zugeordneten und mit einem Rechner verbundenen Leseeinrichtung und dem Kundenmedium erfasst wird, wenn sich das Kundenmedium in Reichweite der zumindest einen Leseeinrichtung befindet, wobei das Kundenmedium einen RF-Transceiver umfasst und mit dem Rechner über die zumindest eine Leseeinrichtung in einem vorgegebenen Frequenzbereich kommuniziert.

Für den Fall einer gültigen Berechtigung werden standortbezogene Dienstleistungen zur Verfügung gestellt, deren Bereitstellung von der Erfassung des Kundenmediums durch zumindest eine dem Standort zugeordnete Leseeinrichtung abhängt. Hierbei wird das Kundenmedium von einem Rechner über die zumindest eine Leseeinrichtung derart gesteuert, dass der Energieverbrauch des Kundenmediums minimiert wird.

Für den Fall, dass das Kundenmedium zum Zweck der Datenkommunikation mit einem vorzugsweise mobilen, als Datenaus- und -eingabegerät dienenden Gerät in oder am Gerät anordenbar ist oder mit dem Gerät berührungslos verbindbar ist, weisen das Gerät und das Kundenmedium Schnittstellen auf, die eine Verbindung zwischen dem Kundenmedium und dem Gerät zum Zweck der Datenübertragung ermöglichen. Die Schnittstellen können Kontakte, NFC- oder RFID-Schnittstellen, Bluetooth^{®} - Schnittstellen oder weitere, aus dem Stand der Technik bekannte Schnittstellen zur Datenkommunikation sein. Hierbei wird das Gerät als Datenaus- und -eingabegerät eingesetzt, wobei der Datentransfer zwischen Kundenmedium und Gerät über die Schnittstelle erfolgt.

Im Folgenden wird der Ausdruck "mit einem Gerät verbindbar" in dem Sinne verwendet, dass das Kundenmedium zum Zweck der Datenkommunikation in oder an einem Gerät anordenbar ist oder mit dem Gerät berührungslos verbindbar ist, verwendet.

Das erfindungsgemäße System umfasst demnach die Kundenmedien und zumindest eine Leseeinrichtung zur Erfassung der Medieninformation des Kundenmediums. Die zumindest eine Leseeinrichtung ist wiederum mit weiteren Komponenten, wie beispielsweise mit einem Rechner verbunden, um die Berechtigung zur Beanspruchung der standortbezogenen Dienstleistungen anhand der Medieninformation zu überprüfen. Für den Fall einer gültigen Berechtigung werden die entsprechenden standortbezogenen Dienstleistungen zur Verfügung gestellt, wobei zu diesem Zweck benötigte Vorrichtungen durch den Rechner gesteuert werden. Alternativ dazu kann die Auswertung der Medieninformation direkt in der Leseeinrichtung erfolgen. Eine Leseeinrichtung im Sinne der Erfindung ist eine Einrichtung die zum Einen Daten des Kundenmediums auslesen kann und zum Anderen dazu geeignet ist, Daten bzw. Datenströme an das Kundenmedium zu senden.

Ferner ist für den Fall, dass mehrere Leseeinrichtungen an einem Standort vorgesehen sind, zumindest ein zentraler Rechner vorgesehen, welcher die Leseeinrichtungen steuert und die Auswertung bzw. Überprüfung der Berechtigung durchführt. Durch den zentralen Rechner kann auch die Bereitstellung der Dienstleistungen gesteuert werden, wobei der Rechner zu diesem Zweck mit den benötigten Vorrichtungen kabelgebunden oder berührungslos verbunden ist.

Standortbezogene Dienstleistungen können z.B. die Bereitstellung von zusätzlichen Informationen über den Standort, über dem Standort zugeordnete Gegenstände, über im Standort befindliche Gegenstände oder über im Standort angebotene Dienstleistungen in optischer, akustischer oder elektronischer Form sein. Beispielsweise kann der Besucher einer Ausstellung mittels des erfindungsgemäßen Verfahrens Informationen zu den Exponaten erhalten, sobald er sich diesen nähert, wobei für den Fall, dass das Kundenmedium mit einem Gerät verbindbar ist, die Informationen mittels des Gerätes angezeigt werden können. Hierbei kann das Kundenmedium die Eintrittskarte sein, wenn zusätzliche Optionen gebucht worden sind.

Das Kundenmedium weist vorzugsweise einen semi-permanenten Speicher zum Speichern der an das Kundenmedium gesendeten Informationen auf. Auf diese Weise können nach der Verbindung des Kundenmediums mit einem Gerät diese Informationen angezeigt werden.

Für den Fall, dass das Kundenmedium mit einem Gerät verbindbar ist, weist das Gerät Komponenten, wie beispielsweise ein Display, das als Touch-Display ausgeführt sein kann und/oder eine Lautsprechereinheit oder einen Anschluss für Kopfhörer auf. Ferner kann das Gerät eine Tastatur aufweisen, die in das Display in Form einer Touch-Tastatur integriert sein kann. Das Gerät kann auch Sensoren aufweisen, beispielsweise einen Neigungssensor oder einen Näherungssensor. Das Gerät kann für den Fall des Vorliegens einer Berechtigung zur Beanspruchung der standortbezogenen Dienstleistungen über das Kundenmedium aktiviert werden. Im Rahmen einer Weiterbildung der Erfindung kann das Gerät ein Mobiltelefon oder ein Tablet-Computer sein.

Beispielsweise kann das Kundenmedium eine NFC-Schnittstelle aufweisen und an einer Seite eines Gerätes mit NFC-Schnittstelle platziert werden. Hierbei wird das Gerät als Datenaus-und -eingabegerät eingesetzt, wobei der Datentransfer zwischen Kundenmedium und Gerät über das NFC-Protokoll erfolgt. Die NFC-Schnittstelle kann ferner eine Signierung und Verschlüsselung ermöglichen. Eine weitere Möglichkeit der Kommunikation zwischen dem Kundenmedium und dem Gerät stellt eine Bluetooth Schnittstelle dar. Hierbei kann ein "Pairing" der Bluetoothschnittstelle des Kundenmediums zum Gerät auch über einen NFC-Datenaustausch automatisch ohne eine Aktion des Anwenders erfolgen, wobei der eigentliche Datenaustausch zwischen Kundenmedium und Gerät dann über Bluetooth erfolgt.

Gemäß der Erfindung kann außer der Erfassung und Auswertung der Medieninformation des Kundenmediums auch die Signalstärke, mit der das Signal des Kundenmediums von der zumindest einen Leseeinrichtung empfangen worden ist, erfasst werden, wodurch die Entfernung zwischen dem Kundenmedium und der zumindest einen Leseeinrichtung bestimmt werden kann. Für den Fall, dass das Signal des Kundenmediums von mehreren Leseeinrichtungen empfangen wird, kann auf diese Weise eine Lokalisierung des Kundenmediums durchgeführt bzw. der Standort des Kundenmediums genauer ermittelt werden, wodurch standortbezogene Dienstleistungen mit höherer Genauigkeit zur Verfügung gestellt werden können.

Alternativ oder zusätzlich zur Signalstärke kann die Laufzeit des Signals ausgewertet werden und darüber eine Entfernungsmessung bzw. bei Einsatz von drei Leseeinrichtungen auch eine genaue Ortsbestimmung d.h. Lokalisierung des Kundenmediums vorgenommen werden. Zu diesem Zweck werden vom Kundenmedium gesendete Signale mit einem Zeitstempel versehen, um auf diese Weise anhand der Empfangszeit seitens der zumindest einen Leseeinrichtung die Signallaufzeit zu bestimmen.

Vorzugsweise weist das Kundenmedium ein Kartenformat, beispielsweise ein ISO-Kartenformat auf.

Das Kundenmedium umfasst vorzugsweise eine erste und eine zweite Antenne, die auf einem PCB-Substrat ausgeführt sind. Das Kundenmedium wird vorzugsweise einer Person zugeordnet. Die Antennen des Kundenmediums können als Dipole, gefaltete Dipole, "inverted F"-Antennen, Quadrupol-Antennen, ähnlich Patch-Antennen oder Antennenschleifen und -spulen ausgeführt sein.

Hierbei ist die erste Antenne vorzugsweise für den Bereich 13 MHz - 10 GHz ausgelegt und dient als Wake-up-Antenne zum Empfangen eines Wake-up-Signals, wenn sich das Kundenmedium in einem "Sleep"-Modus befindet. Das Wake-up-Signal wird vorzugsweise amplitudenmoduliert gesendet und enthält eine vorgegebene Signalfolge, wobei das von der Wake-up-Antenne empfangene Signal von einem als Wake-up-Erfassungsmodul dienenden Operationsverstärker verstärkt und demoduliert und von einem im "Sleep-Modus" teilweise aktivierten Mikroprozessor ausgewertet wird, wobei für den Fall eines als gültig erkannten Wake-up-Signals, d.h. eines Signals mit der richtigen Sequenz, der Mikroprozessor vollständig aktiviert wird und der Tranceiver des Kundenmediums eingeschaltet wird, wodurch das Kundenmedium in einen Aktiv-Modus übergeht.

Der Operationsverstärker ist die einzige Komponente des Kundenmediums, die im "Sleep"-Modus vollständig aktiv ist und ist derart ausgeführt, dass er einen minimalen Stromverbrauch aufweist. Im "Sleep-Modus" ist zudem lediglich ein Teil des Mikroprozessors aktiviert. Das Kundenmedium weist zudem einen Ruhe-Modus auf, bei dem nur der Mikroprozessor aktiv ist, um den Übergang in den "Sleep"-Modus oder in den Aktiv-Modus gemäß vorgegebener Routinen zu steuern. Der Mikroprozessor des Kundenmediums weist demnach unterschiedliche Aktivitätsmodi auf.

Die zweite Antenne empfängt und sendet ebenfalls vorzugsweise im Bereich 13 MHz - 10 GHz und ist mit einem RF Tranceiver verbunden, wobei der Tranceiver nur dann aktiviert wird, wenn sich das Kundenmedium im Aktiv-Modus befindet, wodurch der Energieverbrauch des Kundenmediums minimiert wird. Die Bitrate des Tranceivers beträgt vorzugsweise 1 oder 2 Mbit/s. Über den Tranceiver kann die Daten-Kommunikation mit entsprechenden Leseeinrichtungen über mehrere Kanäle mit leicht unterschiedlichen Frequenzen durchgeführt werden, um auf diese Weise Kollisionen mit fremden Diensten zu vermeiden und eine schnelle Kontaktaufnahme zu ermöglichen.

Um ein Risiko der Störung während der Datenübertragung zu reduzieren, wird durch den Tranceiver ein laufendes Wechseln der Datenkanäle ermöglicht (frequency hopping). Beispielsweise können zur Datenübertragung über die zweite Antenne im 2,4 GHz-Band drei "advertising channels" zur Kontaktaufnahme mit einer Leseeinrichtung und fünf "communication channels" zur Datenkommunikation mit der Leseeinrichtung verwendet werden. Alternativ erfolgt die Anmeldung und spätere Datenübertragung über "ultra wide band" Kommunikationen. Diese überdecken einen Frequenzraum der bzgl. der Mittenfrequenz mindestens 20 % Bandbreite oder mehr als 500 MHz Bandbreite nutzen kann.

Die erste und die zweite Antenne dienen der langreichweitigen Daten-Kommunikation mit zumindest einer Leseeinrichtung zur Erfassung der Medieninformation des Kundenmediums, zum Auslesen von im Kundenmedium gespeicherten Daten und/oder zum Beschreiben des Kundenmediums und/oder zum Senden eines Datenstroms, beispielsweise in Form von Video- und/oder Audio-Dateien- oder Strömen an das Kundenmedium. Langreichweitige Daten-Kommunikation im Sinne der Erfindung ist eine Daten-Kommunikation mit einer Reichweite von mehr als 0,5 Meter.

Das Kundenmedium weist demnach einen "Sleep"-Modus, einen Ruhe-Modus und einen Aktiv-Modus auf, wobei im "Sleep"-Modus nur der Operationsverstärker und ein Teil des Mikroprozessors aktiviert sind. Der Mikroprozessor des Kundenmediums ist im "Sleep"-Modus weitestgehend ausgeschaltet und im Ruhe- und Aktiv-Modus vollständig eingeschaltet, wobei der Transceiver im "Sleep"- und im Ruhe-Modus ausgeschaltet ist und lediglich im Aktiv- Modus eingeschaltet ist. Auf diese Weise wird der Energieverbrauch des Kundenmediums so gering wie möglich gehalten.

Das Kundenmedium kann als aktives Kundenmedium ausgeführt sein, wobei in diesem Fall eine Batterie, vorzugsweise ein 3-Volt-Batterie zur Stromversorgung der Komponenten vorgesehen ist. Optional kann das Kundenmedium ein LCD-Display und einen entsprechenden Treiber und/oder eine Einrichtung zur optischen und/oder akustischen Anzeige z.B. eines niedrigen Batteriestatus oder weiterer Daten oder Zustände des Kundenmediums aufweisen.

Im Rahmen weiterer Ausführungsformen ist das Kundenmedium derart ausgeführt, dass es über einen HF-Puls, der von zumindest einer Leseeinrichtung ausgestrahlt wird, mit Energie geladen wird, somit die benötigte Energie aus dem Feld der Leseeinrichtung bezieht und anschließend für eine vorgegebene Zeit autark arbeiten kann. Zu diesem Zweck weist das Kundenmedium einen Kondensator zum Speichern der Energie und einen entsprechenden Schaltkreis auf. Der Puls ist vorzugsweise ein Puls im UHF - Bereich.

Für den Fall, dass das Kundenmedium keine eigene Energieversorgung aufweist, kann zudem das "Wake - Up" Signal im HF-Puls enthalten sein. Ferner kann für den Fall, dass das Kundenmedium keine eigene Energieversorgung aufweist, vorgesehen sein, dass in regelmäßigen, vorgegebenen Zeitintervallen von zumindest einer Leseeinrichtung ein HF-Signal ausgestrahlt wird, um die sich in Reichweite befindlichen Kundenmedien mit Energie zu versorgen.

Ferner kann für den Fall, dass das Kundenmedium mit einem Gerät verbindbar ist, das Kundenmedium die zum Betrieb benötigte Energie vom Gerät beziehen. Im Falle einer NFC-Kopplung gelingt dies über das 13 MHz Kommunikationsfeld. Über ein solches Feld kann eine Batterie des Kundenmediums auch permanent nachgeladen werden.

Ferner kann das Kundenmedium ein entsprechend dimensioniertes Solarmodul aufweisen, um auf diese Weise die Batterie aufzuladen. Im Rahmen einer Weiterbildung der Erfindung verfügt das Kundenmedium über Mittel zur Eingabe einer PIN, die als numerische Tastatur ausgeführt sein können und/oder über zumindest einen Biometriesensor, beispielsweise einen Fingerabdrucksensor, um die Berechtigung der Benutzung des Kundenmediums seitens einer Person zu überprüfen.

Für den Fall, dass das Kundenmedium mit einem Gerät verbindbar ist, können Eingaben auch über eine Tastatur oder Sensoren des Gerätes erfolgen. Die Weitergabe an das Kundenmedium erfolgt über die Schnittstelle zur Datenkommunikation mit dem Kundenmedium.

Wenn sich das Kundenmedium zu Beginn des Verfahrens nicht in Reichweite einer Leseeinrichtung des Systems zur Bereitstellung von standortbezogenen Dienstleistungen befindet, befindet es sich in einem "Sleep"-Modus, wobei im Sleep-Modus im Wesentlichen keine elektrische Aktivität stattfindet, wodurch für den Fall einer eigenen Energieversorgung des Kundenmediums die Batterie, welche das Kundenmedium mit Energie versorgt, kaum belastet wird.

Die zumindest eine Leseeinrichtung sendet in regelmäßigen Intervallen im Rahmen einer Aufweck-Phase ein "Wake-up"-Signal. Für den Fall, dass mehrere Leseeinrichtungen vorgesehen sind, sendet der zentrale Rechner, welcher die Leseeinrichtungen steuert, in regelmäßigen Intervallen das "Wake-up"-Signal , welches sequentiell von allen Leseeinrichtungen, welche mit dem zentralen Rechner verbunden sind, ausgestrahlt wird. Wenn das Kundenmedium dieses Signal empfängt, führt dies bei einem als gültig erkannten "Wake-up" - Signal zur Aktivierung des Kundenmediums und Übergang in einen Aktiv-Modus und somit zum Verlassen des "Sleep"-Modus.

Anschließend werden vom Kundenmedium Daten zur Berechnung einer Session-ID gesendet, welche von der zumindest einen Leseeinrichtung empfangen und über ein Bussystem, ein WLAN oder weitere Netzwerksysteme, über die die zumindest eine Leseeinrichtung mit einem Rechner verbunden ist, an den Rechner gesendet werden.

Die Berechnung der Session ID beruht vorzugsweise auf dem bekannten "Challenge Response"-Verfahren. Entsprechende antwortet der Rechner nach Empfang des ersten Datensatzes von dem Kundenmedium mit einem weiteren Datensatz. Jeweils werden beide Datensätze mit nur in dem Kundenmedium und im Rechner vorliegenden weiteren Informationen (Algorithmen, Schlüssel) verrechnet und daraus die Session-ID bestimmt. Einem mithörenden Dritten sind die nur in dem Kundenmedium oder im Rechner vorhandenen Informationen fremd, so dass mit der Session-ID eine nur dem Kundenmedium und dem Rechner bekannter Datensatz vorliegt. Dieser wird für weitere Absicherungen wie Authentifizierungen herangezogen. Nach der Berechnung der Session -ID kann vom Kundenmedium die Medieninformation gesendet werden.

Gemäß einer Variante der Erfindung erfolgt die Kommunikation zwischen der zumindest einen Leseeinrichtung und dem Kundenmedium verschlüsselt und optional signiert, wobei die Verschlüsselung für jedes Kundenmedium unterschiedlich ist. Für den Fall einer Signierung wird ein Zeitstempel verwendet, der pro Kommunikation inkrementiert wird, so dass jede Nachricht, die zusätzlich signiert ist, einen einzigartigen, abgesicherten Datensatz darstellt.

Hierbei kann im Rahmen einer Weiterbildung der Erfindung vor Beginn der Kommunikation eine gegenseitige Authentifizierung durchgeführt werden, so dass das Kundenmedium als bekannt und authentifiziert markiert ist, wobei im Rahmen der Authentifizierung zwischen dem Kundenmedium und der zumindest einen Leseeinrichtung bzw. dem mit der zumindest einen Leseeinrichtung verbundenen Rechner eine sichere Verbindung aufgebaut wird, so dass die benötigten Informationen des Kundenmediums sicher übertragen werden können. Das Kundenmedium ist über die Session-ID eindeutig erkannt, wobei die Session-ID für die Dauer einer gültigen Authentifizierung gilt und unabhängig von den weiteren übertragenen Informationen ist. Bei einem Übergang vom Aktiv-Modus in den Ruhe-Modus wird die erfolgte Authentifizierung nicht gelöscht, wobei die Authentifizierung bei einem Übergang in den Sleep-Modus gelöscht wird, wobei, wenn das Kundenmedium in den Sleep-Modus übergegangen ist, es nur mit einem erneuten Wake-Up-Signal und anschließender erneuter gegenseitiger Authentifizierung erfasst und registriert werden kann.

Im Rahmen einer Variante der Erfindung erfolgt nach Abschluss der gegenseitigen Authentifizierung die Kommunikation zwischen dem Rechner und dem Kundenmedium verschlüsselt und optional signiert, wobei die Verschlüsselung und Signatur für jedes Kundenmedium unterschiedlich ist und wobei nach einer erneuten Authentifizierung die erneute Registrierung eine erneute, unterschiedliche Verschlüsselung und ggf. Signierung aufweist.

Das Kundenmedium weist zur Realisierung der Authentifizierung und Verschlüsselung einen mit dem Mikroprozessor verbundenen integrierten Schaltkreis auf, der zumindest eine crypto-engine umfasst, wobei vorzugsweise drei crypto-engines enthalten sind, beispielsweise für GRAIN 128, GRAIN 128A, 3-DES oder AES-128.

Im Folgenden wird das erfindungsgemäße Verfahren für den Fall erläutert, dass eine Authentifizierung durchgeführt wird und die Kommunikation zwischen dem mit der zumindest einen Leseeinrichtung verbundenen Rechner und dem Kundenmedium verschlüsselt erfolgt. Sämtliche Schritte des Verfahrens können im Rahmen weiterer Ausgestaltungen jedoch ohne Authentifizierung und ohne Verschlüsselung/Entschlüsselung durchgeführt werden. Ferner kann im Rahmen einer weiteren Ausgestaltung der Erfindung, bei der keine Verschlüsselung oder Authentifizierung vorgesehen ist, die Session-ID die Medieninformation des Kundenmediums sein, beispielsweise eine eineindeutige Nummer, die gleich nach dem Übergang in den Aktiv - Modus an den Rechner geschickt wird.

Hierbei ist vorgesehen, dass das Kundenmedium nach der Authentifizierung eine verschlüsselte Medieninformation sendet, welche über zumindest eine Leseeinrichtung empfangen und mit der Leseeinrichtungs-ID und der Signalstärke, mit der das Signal von der Leseeinrichtung empfangen worden ist und/oder der Laufzeit der Daten zwischen Kundenmedium und der zumindest einen Leseeinrichtung ergänzt und an den mit der zumindest einen Leseeinrichtung verbundenen Rechner weitergeleitet wird. Im Rechner wird die Medieninformation entschlüsselt und verarbeitet, wobei für den Fall einer vorliegenden Berechtigung zur Beanspruchung der standortbezogenen Dienstleistungen, diese der Person, der das Kundenmedium zugeordnet ist, zur Verfügung gestellt werden. Die Signalstärke und/oder die Signallaufzeit werden benötigt, um eine Lokalisierung des Kundenmediums zu ermöglichen. Durch die Medieninformation, die eine eineindeutige Nummer sein kann, kann das Kundenmedium eineindeutig identifiziert werden, wobei anhand der Medieninformation festgestellt werden kann, ob beispielsweise eine Berechtigung für die Beanspruchung einer Dienstleistung vorliegt.

Beispielsweise können über die Leseeinrichtungen standortbezogene Informationen an das Kundenmedium gesendet werden. Für den Fall eines Museums oder eines Messestands können Informationen in Form von Video und/oder Audio-Dateien oder eines Video und/oder Audio - Datenstroms an das Kundenmedium gesendet werden, die im Fall einer Verbindung des Kundenmediums mit einem Gerät über die Schnittstelle zum Gerät übertragen werden und vom Gerät angezeigt bzw. abgespielt werden, die sich auf ein Exponat oder eine Gruppe von Exponaten beziehen, denen die zumindest eine Leseeinrichtung zugeordnet ist oder über den Messestand, dem die Leseeinrichtung zugeordnet ist. Durch die Erhöhung der Anzahl der Leseeinrichtungen kann die räumliche Auflösung erhöht werden, wodurch Dienstleistungen angeboten werden können, die sich auf einen sehr kleinen Standort beziehen.

Für den Fall, dass mehrere Leseeinrichtungen die Medieninformation empfangen haben, werden standortbezogene Dienstleistungen über den dem Kundenmedium nächstliegenden Standort zur Verfügung gestellt, wobei der nächstliegende Standort anhand der Signalstärke, mit der die Leseeinrichtungen die Medieninformation empfangen haben und/oder anhand der Laufzeit von Daten zwischen Kundenmedium und Leseeinrichtung ermittelt wird. Beispielsweise werden für den Fall eines Museums Informationen über ein Exponat zur Verfügung gestellt, dem die Leseeinrichtung, die das stärkste Signal des Kundenmediums empfangen hat, zugeordnet ist.

Ferner kann die standortbezogene Dienstleistung die Aktivierung eines Anzeigegerätes, beispielsweise eines Informationsterminals am Standort sein, wobei in diesem Fall bei gültiger Berechtigung das Anzeigegerät aktiviert wird, wenn das Kundenmedium von einer dem Anzeigegerät zugeordneten Leseeinrichtung erfasst wird und eine Berechtigung vorliegt.

Im Rahmen einer Weiterbildung des Verfahrens wird nach erfolgter Auswertung der Medieninformation eine Bestätigung enthaltend einen Zeitstempel und eine vorgegebene Dauer bis zur nächsten Kontaktaufnahme nach dem Übergang in einen Ruhemodus zum Senden der verschlüsselten und signierten Medieninformation an den Rechner über die zumindest eine Leseeinrichtung ausgesendet. Anschließend wird das Kundenmedium für die vorgegebene Dauer in einen Ruhemodus versetzt, wobei dies entweder sofort nach Erhalt der Bestätigung, nach einer vorgegebenen Zeitspanne, die im Signal enthaltend die Bestätigung enthalten ist, nach erfolgter Übertragung von standortbezogenen Informationen, nach der Beendigung der Beanspruchung der Dienstleistungen oder nach einem erneuten Signal nach der Beendigung der Beanspruchung der Dienstleistungen erfolgen kann.

Das Kundenmedium empfängt die Bestätigung und geht für den Fall, dass die Inanspruchnahme der standortbezogenen Dienstleistungen den Betrieb des Kundenmediums nicht benötigt, was beispielsweise für den Fall einer Aktivierung einer standortspezifischen Anzeigevorrichtung der Fall ist, sofort nach Erhalt der Bestätigung in einen Ruhemodus über, in dem der Energieverbrauch sehr gering ist, wobei der Wechsel in den Ruhemodus die erfolgte Authentifizierung nicht löscht. Wenn die Inanspruchnahme der standortbezogenen Dienstleistungen den Betrieb des Kundenmediums erfordert, geht das Kundenmedium nach einer vorgegebenen Zeitspanne, nach erfolgter Übertragung von standortbezogenen Informationen, nach der Beendigung der Beanspruchung der Dienstleistungen oder nach einem erneuten Signal nach der Beendigung der Beanspruchung der Dienstleistungen in den Ruhemodus über.

Nach der vorgegebenen Dauer bis zur nächsten Kontaktaufnahme nach dem Übergang in einen Ruhemodus geht das Kundenmedium in den Aktivmodus über und sendet seine Medieninformation verschlüsselt und optional signiert an den Rechner über zumindest eine Leseeinrichtung. Dadurch kann erkannt werden, wo sich das Kundenmedium befindet, um auf diese Weise weitere standortbezogene Dienstleistungen, z.B. Informationen über weitere Messestände einer Messe oder Exponate einer Ausstellung zur Verfügung zu stellen.

Durch das Verlassen des Ruhemodus und den Übergang in den Aktivmodus nach der ersten vorgegebenen Zeit und erneutes Senden der Medieninformation wird das Kundenmedium "getrackt", da anhand der Signalstärke und/oder der Laufzeit des Signals eine Ortsinformation gewonnen wird, welche verwendet wird, um standortspezifische Dienstleistungen zur Verfügung zu stellen.

Das entsprechende Signal des Kundenmediums wird von mindestens einer Leseeinrichtung erfasst und an den Rechner weitergeleitet, wobei der Empfang der Identität des Kundenmediums mit dem erneuten Aussenden einer Bestätigung, die vom Rechner generiert und von den Leseeinrichtungen gesendet wird, beantwortet wird. Ferner werden die standortbezogenen Dienstleistungen, die dem Standort entsprechen, dem die mindestens eine Leseeinrichtung zugeordnet ist, zur Verfügung gestellt

Nach Empfang der Bestätigung wird das Kundenmedium, in den Ruhemodus versetzt, wobei dies entweder sofort nach Erhalt der Bestätigung, nach einer vorgegebenen Zeitspanne, nach erfolgter Übertragung von standortbezogenen Informationen, nach der Beendigung der Beanspruchung der Dienstleistungen oder nach einem erneuten Signal nach der Beendigung der Beanspruchung der Dienstleistungen erfolgen kann, aus dem er nach dem vorgegebenen Zeitintervall zurückkehrt, um sich erneut mit der verschlüsselten und optional signierten Identität über die Leseeinrichtungen beim Rechner zu melden. Der pro Antwort der Leseeinrichtung inkrementierte Zeitstempel dient gemäß einer Variante der Erfindung neben Sortieraufgaben der Signaturberechnung, da dadurch die Einzigartigkeit der Signatur gewährleistet wird.

Die vorgegebene Dauer bis zur nächsten Kontaktaufnahme und die vorgegebene Zeitspanne für den Übergang in den Ruhe-Modus nach Empfang des entsprechenden Signals können dynamisch angepasst werden, um auf diese Weise beispielsweise der Art der standortbezogenen Dienstleistungen Rechnung zu tragen. Beispielsweise sollte die Zeitdauer bis zur nächsten Kontaktaufnahme für den Fall einer Ausstellung oder einer Messe kurz sein und die durchschnittlichen Aufenthaltszeiten eines Besuchers vor einem Exponat oder bei einem Messestand berücksichtigen.

Ferner ist die vorgegebene Zeitspanne für den Übergang in den Ruhe-Modus nach Empfang des entsprechenden Signals in Abhängigkeit der bereitzustellenden Dienstleistungen derart bemessen, dass das Kundenmedium solange aktiv und empfangs- ggf. auch sendebereit bleibt, bis die standortbezogenen Dienstleistungen beansprucht worden sind, beispielsweise bis eine Video-Datei enthaltend Informationen über ein Exponat vollständig an das Kundenmedium übertragen worden ist.

Die Bestätigung ist für jedes Kundenmedium bzw. Gerät individuell verschlüsselt, wodurch gewährleistet wird, dass nur dasjenige Kundenmedium bzw. Gerät die Bestätigung erhält, welches seine Identität gesendet hat. Auf diese Weise wird nur dieses eine Kundenmedium in den Ruhemodus versetzt bzw. auf diese Weise erhält nur das berechtigte Kundenmedium die Zusatzinformationen.

Die beschriebene Vorgehensweise wiederholt sich bis zum Wechsel des Kundenmediums in den Sleep-Modus, was dann erfolgt, wenn es dem Kundenmedium nach einer vorgegebenen Anzahl von Versuchen nicht gelingt, eine Bestätigung auf das Aussenden der verschlüsselten Medieninformation von dem Rechner über zumindest eine Leseeinrichtung zu erhalten. Im Rahmen des Verfahrens entspricht diese Situation dem Verlassen des Standortes seitens der Person, der das Kundenmedium zugeordnet ist.

Für den Fall, dass das Kundenmedium in einen Sleep-Modus versetzt worden ist, kann es nur mit einem erneuten Wake-Up-Signal und anschließender erneuter gegenseitiger Authentifizierung, wie bereits erläutert, erfasst und registriert werden, wobei die erneute Registrierung erneute, unterschiedliche Verschlüsselung und optional Signierung aufweist. Folglich gilt eine bestimmte Verschlüsselung und Signierung lediglich für ein Kundenmedium und für eine Registrierung. Die Registrierung hält an, solange das Kundenmedium nicht in einen Sleep-Modus versetzt wird. Ein Wake-Up-Signal kann nur im Sleep-Modus verarbeitet werden.

Das Wake-Up-Signal ist ein Signal z.B. im 2,4 GHz Bereich und wird auf einem von ggf. mehreren, vorzugsweise drei "advertising channels" gesendet. Die Daten zur Berechnung der Session-ID werden nach erkanntem, gültigen Wake-Up-Signal und Übergang des Kundenmediums in den Aktiv-Modus ebenfalls auf einem der "advertising channels" gesendet, wodurch das Kundenmedium einen Kommunikations-Kanal für den nächsten Datenaustausch vorschlägt.

Der zugrundeliegende Algorithmus ist derart konzipiert, dass Kollisionen hinsichtlich des Kommunikations-Kanals stochastisch vermieden werden können.

Durch das Wake-up-Signal, die dadurch erfolgte automatische Aktivierung des Kundemediums und die anschließende Kommunikation mit der zumindest einen Leseeinrichtung werden die erworbenen Dienstleistungen standortbezogen automatisch zur Verfügung gestellt.

Des weiteren kann vorgesehen sein, dass an vorgegebenen Orten, beispielsweise an Ausgängen von räumlich abgegrenzten Orten, in denen standortbezogene Dienstleistungen zur Verfügung gestellt werden innerhalb des Ortes in dem die standortspezifischen Dienstleistungen zur Verfügung gestellt werden (d.h. des Ortes, wo das erfindungsgemäße System implementiert ist), z.B. am Ausgang einer Messeabteilung oder eines Ausstellungsraumes eines Museums oder an Eingängen von räumlich abgegrenzten Orten innerhalb des Ortes, in dem die standortspezifischen Dienstleistungen zur Verfügung gestellt werden, d.h. des Ortes, wo das erfindungsgemäße System implementiert ist, in denen keine standortspezifischen Dienstleistungen angeboten werden, wie beispielsweise an Eingängen von Messerestaurants oder Museumsshops, zumindest eine Leseeinrichtung angeordnet ist, wobei wenn eine derartige Leseeinrichtung die Medieninformation vom Kundenmedium erhält, vom System an das Kundenmedium ein Befehl gesendet wird, der das Kundenmedium für eine zweite vorgegebene Zeit in den Ruhemodus versetzt, die einer durchschnittlichen Aufenthaltsdauer außerhalb der räumlich abgegrenzten Orte , in denen die standortspezifischen Dienstleistungen zur Verfügung gestellt werden bzw. der durchschnittlichen Aufenthaltsdauer in den Orten, in denen keine standortspezifischen Dienstleistungen angeboten werden, entspricht. Auf diese Weise wird der Energieverbrauch des Kundenmediums gering gehalten.

Ferner kann an Ausgängen des Ortes, in dem die standortspezifischen Dienstleistungen angeboten werden, d.h. des Ortes, wo das erfindungsgemäße System implementiert ist, zumindest eine Leseeinrichtung angeordnet sein, welche nach Erhalt der Medieninformation vom Kundenmedium, einen vom System generierten Befehl an das Kundenmedium sendet, der das Kundenmedium in den "Sleep" - Modus versetzt, um auf diese Weise den Energieverbrauch des Kundenmediums zu reduzieren.

Im Rahmen einer Weiterbildung der Erfindung kann das Kundenmedium zusätzlich als prepaid-Medium bzw. elektronische Geldbörse dienen, wobei es zu diesen Zweck mit einem bestimmten Geldbetrag aufgeladen werden kann, der über die Kommunikation mit dem Rechner über die zumindest eine Leseeinrichtung elektronisch abbuchbar ist. Hierbei können mittels der Kommunikation mit dem Rechner im Standort angebotene Waren oder standortbezogene Dienstleistungen erworben werden.

Das erfindungsgemäße System kann beispielsweise in einem Museum, bei Messen, Vergnügungsparks etc. eingesetzt werden.

In vorteilhafter Weise kann, wenn die entsprechende Option gebucht ist oder wenn das Kundenmedium auch als elektronische Geldbörse ausgeführt ist, wobei in diesem Fall der entsprechende Betrag vom Kundenmedium abgebucht wird, in einem Vergnügungspark, Museum oder vor einer z.B. touristischen Attraktion nach erfolgter Erfassung des Kundenmediums von zumindest einer einer ortsfest angeordneten Kamera zugeordneten Leseeinrichtung und bei gültiger Berechtigung zur Beanspruchung der Dienstleistung die ortsfest angeordnete Kamera aktiviert werden, um ein Foto der dem Kundenmedium zugeordneten Person vor einem vorgegebenen Hintergrund zu machen, wobei dieses Foto in digitaler Form über die zumindest eine der Kamera zugeordnete Leseeinrichtung an das Kundenmedium geschickt wird. Wenn das Kundenmedium mit einem Gerät, z.B. mit einem Mobiltelefon verbindbar ist, kann das Foto über die Schnittstelle zwischen dem Kundenmedium und dem Gerät an das Gerät übertragen und dort gespeichert und angezeigt werden. Alternativ kann das Foto an einem zentralen Ort gespeichert und später nach geeigneter Authentifizierung von dort abgerufen werden.

Über die Erfassung des Kundenmediums kann eine Vielfalt an standortbezogenen Dienstleistungen angeboten und gebucht werden. Beispielsweise können nach erfolgter Erfassung des Kundenmediums von zumindest einer einem Messestand, einem Schaufenster, einem Produkt oder einer Dienstleistung zugeordneten Leseeinrichtung und

gültiger Berechtigung an das Kundenmedium Informationen und Angebote gesendet werden, die für den Fall der Ausführung des Kundenmediums als elektronische Geldbörse menügesteuert gebucht bzw. gekauft werden können. Hierbei dient das mit dem Kundenmedium verbundene Gerät als Datenaus- und -eingabegerät zur Anzeige und Buchung. Beispielsweise kann die dem Kundenmedium zugeordnete Person und für den Fall, dass das Kundenmedium von der einem Kino zugeordneten Leseeinrichtung erfasst wird, informiert werden, wann und mit welchem Film die nächste Vorstellung beginnt und ob Plätze frei sind, die anschließend gebucht werden können.

Ferner kann das erfindungsgemäße Kundenmedium vom erfindungsgemäßen System als Identifikationsmittel für Personen genutzt werden, wenn es einer Person eineindeutig zugeordnet ist. Für den Fall, dass es über einen Biometriesensor, beispielsweise einen Fingerabdrucksensor verfügt, kann ein Missbrauch vermieden werden. Hierbei kann vorgesehen sein, dass nach dem Empfang des Wake-up Signals die Kommunikation zwischen dem Kundenmedium und den Leseeinrichtungen erst nach erfolgter Auswertung des Fingerabdrucks oder weiterer biometrischer Merkmale im Kundenmedium starten kann.

Zudem kann das erfindungsgemäße Verfahren zur automatisierten Herausgabe von Waren, Tickets oder Bordkarten verwendet werden, wobei nach erfolgter Erfassung des Kundenmediums von zumindest einer einem Automaten zugeordneten Leseeinrichtung und bei gültiger Berechtigung zur Beanspruchung der Waren, Tickets oder Bordkarten diese herausgegeben werden. Alternativ dazu kann für den Fall der Ausführung des Kundenmediums als elektronische Geldbörse nach Erfassung des Kundenmediums der den Waren, Tickets oder Bordkarten entsprechende Betrag vom Kundenmedium abgebucht werden, wobei anschließend die Waren, Tickets oder Bordkarten herausgegeben werden. Hierbei ist der Automat mit dem Rechner des erfindungsgemäßen Systems verbunden.

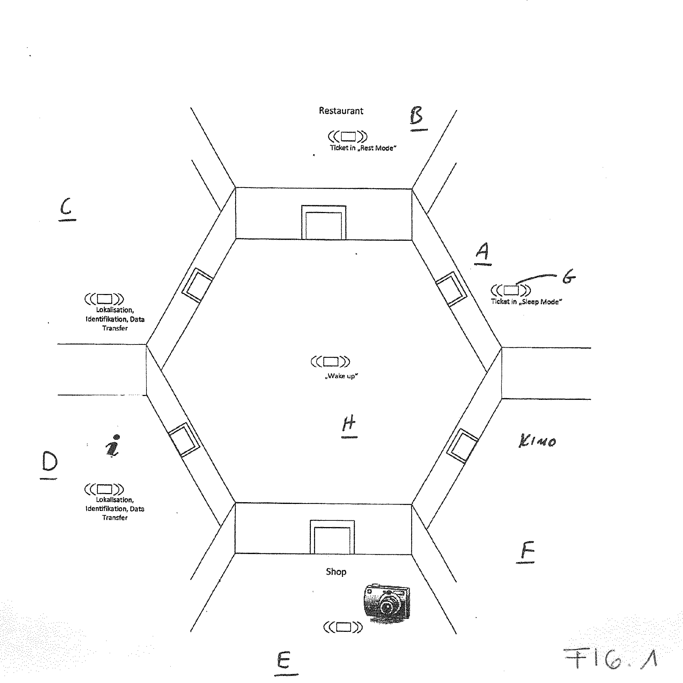

Die Erfindung wird im Folgenden anhand der beigefügten Figur beispielhaft näher erläutert.

In der Figur ist eine schematische Draufsicht eines Museums gezeigt, in dem das erfindungsgemäße System implementiert ist. Das Museum umfasst einen Eingang A, ein Restaurant B, einen Ausstellungsraum C, einen Informationsraum D, einen Museumsshop E und ein Kino F.

Wenn ein Besucher mit dem ihm zugeordneten Kundenmedium das Museum betritt, befindet sich das Kundenmedium G im Bereich des Eingangs A, was z.B. vor dem Eingang erworben wurde, in einem "Sleep"-Modus. Wenn der Besucher den Eingang passiert und sich im Foyer H befindet, empfängt das Kundenmedium G das Wake-up signal, das von der zumindest einen im Foyer installierten Leseeinrichtung in regelmäßigen Abständen ausgestrahlt wird. Das Wake-up signal wird von sämtlichen Leseeinrichtungen des Systems ausgestrahlt, um zu gewährleisten, dass ein irrtümlich, beispielsweise aufgrund einer unbeabsichtigten Abschirmung sich im "Sleep"-Modus befindliches Kundenmedium G, wieder aktiviert werden kann.

Nach Empfang des "Wake-up"-Signals vom Kundenmedium G wird das Kundenmedium G bei einem als gültig erkannten "Wake-up" - Signal aktiviert und der "Sleep"-Modus wird verlassen. Das Kundenmedium G befindet sich nun im Aktiv-Modus. Anschließend werden vom Kundenmedium G Daten zur Berechnung einer Session-ID gesendet, welche von der zumindest einen Leseeinrichtung empfangen und über ein Bussystem, über das die zumindest eine Leseeinrichtung mit einem zentralen Rechner, der das erfindungsgemäße System steuert, verbunden ist, an den zentralen Rechner gesendet wird.

Vor Beginn der Kommunikation zwischen Kundenmedium G und der zumindest einen Leseeinrichtung bzw. dem zentralen Rechner wird eine gegenseitige Authentifizierung durchgeführt, so dass das Kundenmedium G als bekannt und authentifiziert markiert ist. Das Kundenmedium ist über die Session-ID eindeutig erkannt, wobei die Session-ID für die Dauer einer gültigen Authentifizierung gilt und unabhängig von den weiteren übertragenen Informationen ist.

Nach erfolgter Authentifizierung sendet das Kundenmedium G eine verschlüsselte Medieninformation, welche über die zumindest eine Leseeinrichtung empfangen und mit der Leseeinrichtungs-ID und der Signalstärke, mit der das Signal von der Leseeinrichtung empfangen worden oder der Laufzeit des Signals zwischen Kundenmedium und Leseeinrichtung ergänzt und an den mit der zumindest einen Leseeinrichtung verbundenen zentralen Rechner weitergeleitet wird. Im Rechner wird die Medieninformation entschlüsselt und verarbeitet, wobei für den Fall einer vorliegenden Berechtigung zur Beanspruchung der standortbezogenen Dienstleistungen, diese der Person, der das Kundenmedium zugeordnet ist, zur Verfügung gestellt werden und wobei ein mit dem Kundenmedium G z.B. über NFC oder bluetooth^{®} verbundenes Gerät als Datenaus- und -eingabegerät zur Anzeige bzw. Abspielen von Informationen dient, die auch Audio- oder Video-Dateien- oder Ströme sein können. Hierbei werden dem nächstliegenden Standort (im vorliegenden Fall dem nächstliegenden Exponat) entsprechende Dienstleistungen zur Verfügung gestellt, wobei der nächstliegende Standort anhand der Signalstärke, mit der die Leseeinrichtungen die Medieninformation empfangen haben und/oder anhand der Laufzeit von Daten zwischen Kundenmedium G und Leseeinrichtung ermittelt wird.

Für den Fall, dass mehrere Leseeinrichtungen die Medieninformation des Kundenmediums G empfangen haben, werden standortbezogene Dienstleistungen über den dem Kundenmedium G nächstliegenden Standort zur Verfügung gestellt, wobei der nächstliegende Standort anhand der Signalstärke, mit der die Leseeinrichtungen die Medieninformation empfangen haben und/oder anhand der Laufzeit von Daten zwischen Kundenmedium und Lesegerät ermittelt wird. Beispielsweise werden für den Fall eines Museums Informationen über ein Exponat zur Verfügung gestellt, dem die Leseeinrichtung, die das stärkste Signal des Kundenmediums G empfangen hat, zugeordnet ist.

Nach erfolgter Auswertung der Medieninformation wird über zumindest eine Leseeinrichtung eine Bestätigung enthaltend einen Zeitstempel und eine erste vorgegebene Dauer nach den Übergang in den Ruhemodus bis zur nächsten Kontaktaufnahme zum Senden der verschlüsselten und optional signierten Medieninformation an den zentralen Rechner über die zumindest eine Leseeinrichtung ausgesendet. Anschließend wird das Kundenmedium G in den Ruhemodus versetzt, wobei dies entweder sofort nach Erhalt der Bestätigung, nach einer vorgegebenen Zeitspanne, nach erfolgter Übertragung von standortbezogenen Informationen, nach der Beendigung der Beanspruchung der Dienstleistungen oder nach einem erneuten Signal nach der Beendigung der Beanspruchung der Dienstleistungen erfolgen kann.

Nach der vorgegebenen Dauer bis zur nächsten Kontaktaufnahme nach den Übergang in den Ruhemodus geht das Kundenmedium G in den Aktiv Modus über und sendet seine Medieninformation verschlüsselt und optional signiert an den zentralen Rechner über zumindest eine Leseeinrichtung. Durch das Verlassen des Ruhemodus und den Übergang in den Aktivmodus nach der ersten vorgegebenen Zeit und erneutes Senden der Medieninformation wird das Kundenmedium "getrackt", da anhand der Signalstärke und/oder der Laufzeit des Signals eine Ortsinformation gewonnen wird, welche verwendet wird, um standortspezifische Dienstleistungen, z.B. Informationen über Exponate im Ausstellungsraum C zur Verfügung zu stellen.

Das entsprechende Signal des Kundenmediums wird von mindestens einer Leseeinrichtung erfasst und an den Rechner weitergeleitet, wobei der Empfang der Identität des Kundenmediums mit dem erneuten Aussenden einer Bestätigung, die vom Rechner generiert und von den Leseeinrichtungen gesendet wird, beantwortet wird. Hierbei werden in Abhängigkeit des Ortes, wo sich das Kundenmedium befindet, die entsprechenden Dienstleistungen zur Verfügung gestellt, wie bereits erläutert.

Nach Empfang der Bestätigung wird das Kundenmedium G wieder in den Ruhemodus versetzt, aus dem er nach dem vorgegebenen Zeitintervall zurückkehrt, um sich erneut mit der verschlüsselten und optional signierten Identität über die Leseeinrichtungen beim zentralen Rechner zu melden. Wie bereits erläutert kann das Kundenmedium G in den Ruhemodus entweder sofort nach Erhalt der Bestätigung, nach einer vorgegebenen, dynamisch anpassbaren Zeitspanne, nach erfolgter Übertragung von standortbezogenen Informationen, nach der Beendigung der Beanspruchung der Dienstleistungen oder nach einem erneuten Signal nach der Beendigung der Beanspruchung der Dienstleistungen versetzt werden.

Die vorgegebene Dauer bis zur nächsten Kontaktaufnahme kann dynamisch angepasst werden, um auf diese Weise beispielsweise der Art der standortbezogenen Dienstleistungen Rechnung zu tragen. Beispielsweise ist die Zeitdauer für den Fall einer Ausstellung in einem Museum kurz und berücksichtigt die durchschnittlichen Aufenthaltszeiten eines Besuchers vor einem Exponat und/oder die Wege des Benutzers vom einen Exponat zum nächsten. Die dynamische Anpassung der vorgegebenen Dauer bis zur nächsten Kontaktaufnahme kann eine Abhängigkeit vom aktuellen Standort aufweisen, um z.B. für den Fall einer Ausstellung die bekannte durchschnittliche Aufenthaltsdauer vor einem bestimmten Exponat zu berücksichtigen.

Die Bestätigung ist für jedes Kundenmedium G individuell verschlüsselt, wodurch gewährleistet wird, dass nur dasjenige Kundenmedium bzw. Gerät die Bestätigung erhält, welches seine Identität gesendet hat. Auf diese Weise wird nur dieses eine Kundenmedium G in den Ruhemodus versetzt bzw. auf diese Weise erhält nur das berechtigte Kundenmedium G die Dienstleistungen in Form von Zusatzinformationen.

Die beschriebene Vorgehensweise wiederholt sich bis zum Wechsel des Kundenmediums G in den Sleep-Modus, was dann erfolgt, wenn es dem Kundenmedium G nach einer vorgegebenen Anzahl von Versuchen nicht gelingt, eine Bestätigung auf das Aussenden der verschlüsselten Medieninformation von dem Rechner über zumindest eine Leseeinrichtung zu erhalten. In diesem Fall befindet sich das Kundenmedium G außerhalb des Museumsgebäudes und der Besucher hat das Museum verlassen.

Wenn der Besucher nach dem Besuch des Ausstellungsraumes C das Museumsrestaurant B besucht, wird das Kundenmedium G über zumindest eine am Eingang des Restaurants B angeordnete Leseeinrichtung erfasst, wobei wenn die zumindest eine Leseeinrichtung die Medieninformation vom Kundenmedium G erhält, vom System an das Kundenmedium G ein Befehl gesendet wird, der das Kundenmedium G für eine zweite vorgegebene Zeit in den Ruhemodus versetzt, die einer durchschnittlichen Aufenthaltsdauer im Restaurant B entspricht. Auf diese Weise wird der Energieverbrauch des Kundenmediums G gering gehalten.

Nach der zweiten vorgegebenen Zeit geht das Kundenmedium G in den Aktivmodus über und sendet die Medieninformation, die beispielsweise von einer Leseeinrichtung im Informationsraum D empfangen wird, wodurch das Kundenmedium lokalisiert G ist. Hierbei sendet das System bei gültiger Berechtigung gewünschte Informationen an das Kundenmedium, die über ein mit dem Kundenmedium G verbundenes Gerät angezeigt werden können. Über das Gerät als Datenaus- und -eingabegerät kann der Benutzer Angebote, beispielsweise Karten für eine Vorstellung im Kino F des Museums buchen, wobei für den Fall, dass diese nicht bereits beim Erwerb des Kundenmediums bezahlt sind und das Kundenmedium G als elektronische Geldbörse ausgeführt ist, die Bezahlung durch Abbuchung vom Kundenmedium G erfolgt.

Wenn der Besucher anschließend das Kino F betritt, wird das Kundenmedium G über zumindest eine am Eingang des Kinos F angeordnete Leseeinrichtung erfasst und anhand der gesendeten Medieninformation wird überprüft, ob die Berechtigung zum Kinobesuch vorliegt. Sollte dies nicht der Fall sein, wird ein optischer und/oder akustischer Alarm ausgelöst. Alternativ dazu kann nach erfolgter Auswertung der Berechtigung bei gültiger Berechtigung eine Zugangskontrollvorrichtung aktiviert werden, um den Durchgang des Besuchers in den Kinoraum zu ermöglichen. Anschließend kann über zumindest eine Leseeinrichtung ein Signal an das Kundenmedium G gesendet werden, um das Kundenmedium G für die Dauer der Vorstellung in den Ruhemodus zu versetzen. Nach dieser vorgegebenen Dauer geht das Kundenmedium in den Aktivmodus über.

Alternativ zum Versetzen der Kundenmedien der im Kinoraum anwesenden Personen in den Ruhemodus können analog zur bereits beschriebenen Vorgehensweise die Kundenmedien in vorgegebenen Abständen zwischen dem Ruhe- und dem Aktiv-Modus wechseln, wodurch Information über die Anzahl der Besucher im Kinoraum gewonnen wird und auf diese Weise das Kontingent an freien Plätzen ermittelt werden kann, so dass diese Information Besuchern im Informationsraum angezeigt werden kann. Bei einer entsprechend hohen Anzahl an Leseeinrichtungen kann auch die Sitzbelegung ermittelt werden.

Nach Beendigung des Kinobesuchs befindet sich in diesem Fall das Kundenmedium G im Aktivmodus und der Besucher kann beispielsweise den Museumsshop E betreten. Hierbei kann, wenn die entsprechende Option gebucht ist oder wenn das Kundenmedium G als elektronische Geldbörse ausgeführt ist, nach erfolgter Erfassung des Kundenmediums G von zumindest einer einer ortsfest angeordneten Kamera zugeordneten Leseeinrichtung und bei gültiger Berechtigung zur Beanspruchung der Dienstleistung die ortsfest angeordnete Kamera aktiviert werden, um ein Foto der dem Kundenmedium G zugeordneten Person vor einem vorgegebenen Hintergrund zu machen, wobei dieses Foto in digitaler Form über die zumindest eine der Kamera zugeordnete Leseeinrichtung an das Kundenmedium G geschickt wird oder zu späteren Betrachtung auf einem Server abgelegt wird. Wenn das Kundenmedium G mit einem Gerät, z.B. mit einem Mobiltelefon verbunden ist, kann das Foto über die Schnittstelle zwischen dem Kundenmedium G und dem Gerät an das Gerät übertragen und dort gespeichert und angezeigt werden.

Wenn der Besucher das Museumsgebäude verlässt, wechselt das Kundenmedium G in den Sleep-Modus, wenn es dem Kundenmedium G nach einer vorgegebenen Anzahl von Versuchen nicht gelingt, eine Bestätigung auf das Aussenden der verschlüsselten Medieninformation nach der zuletzt vorgegebenen Zeit von dem zentralen Rechner über zumindest eine Leseeinrichtung zu erhalten.

## Patentansprüche

1. Verfahren zur Bereitstellung von standortbezogenen Dienstleistungen, **dadurch gekennzeichnet, dass** die Ermittlung der Berechtigung einer Person zur Beanspruchung der standortbezogenen Dienstleistungen anhand der berührungslosen Erfassung und Auswertung einer Medieninformation eines Kundenmediums erfolgt, wobei anhand der Erfassung des Kundenmediums eine Lokalisierung des Kundenmediums durchgeführt wird und wobei die Medieninformation des Kundenmediums anhand einer automatisch durchführbaren berührungslosen Interaktion zwischen zumindest einer einem Standort zugeordneten und mit einem Rechner verbundenen Leseeinrichtung und dem Kundenmedium erfasst wird, wenn sich das Kundenmedium in Reichweite der zumindest einen Leseeinrichtung befindet, wobei das Kundenmedium einen RF-Transceiver umfasst und mit dem Rechner über die zumindest eine Leseeinrichtung in einem vorgegebenen Frequenzbereich kommuniziert, wobei für den Fall einer gültigen Berechtigung standortbezogene Dienstleistungen zur Verfügung gestellt werden, deren Bereitstellung von der Erfassung des Kundenmediums durch zumindest eine dem Standort zugeordnete Leseeinrichtung abhängt und wobei das Kundenmedium von einem Rechner über die zumindest eine Leseeinrichtung derart gesteuert wird, dass der Energieverbrauch des Kundenmediums minimiert wird.

2. Verfahren zur Bereitstellung von standortbezogenen Dienstleistungen nach Anspruch 1, **dadurch gekennzeichnet, dass** das Kundenmedium zum Zweck der Datenkommunikation mit einem Gerät in oder am Gerät anordenbar ist oder mit dem Gerät berührungslos verbindbar ist, wobei das Gerät als Datenaus- und - eingabegerät eingesetzt wird und wobei der Datentransfer zwischen Kundenmedium und Gerät über eine Schnittstelle zwischen dem Kundenmedium und dem Gerät erfolgt.

3. Verfahren zur Bereitstellung von standortbezogenen Dienstleistungen nach Anspruch 1 oder 2, **dadurch gekennzeichnet, dass** das Kundenmedium zusätzlich als elektronische Geldbörse verwendet wird, wobei es zu diesen Zweck mit einem bestimmten Geldbetrag aufgeladen werden kann, der über die Kommunikation mit dem Rechner über die zumindest eine Leseeinrichtung elektronisch abbuchbar ist

4. Verfahren zur Bereitstellung von standortbezogenen Dienstleistungen nach Anspruch 1, 2 oder 3, **dadurch gekennzeichnet, dass** als standortbezogene Dienstleistungen Informationen über den Standort, über im Standort befindliche oder dem Standort zugeordnete Gegenstände oder über im Standort angebotene Dienstleistungen in elektronischer Form, in Form von Video und/oder Audio-Dateien oder eines Video und/oder Audio - Datenstroms an das Kundenmedium gesendet werden, denen die zumindest eine Leseeinrichtung zugeordnet ist, die im Fall einer Verbindung des Kundenmediums mit einem Gerät über die Schnittstelle zum Gerät übertragen werden und vom Gerät angezeigt bzw. abgespielt werden.

5. Verfahren zur Bereitstellung von standortbezogenen Dienstleistungen nach Anspruch 1, 2 oder 3, **dadurch gekennzeichnet, dass** als standortbezogene Dienstleistung eine automatisierte Herausgabe von Waren, Tickets oder Bordkarten bei gültiger Berechtigung zur Beanspruchung der Waren, Tickets oder Bordkarten oder für den Fall, dass das Kundenmedium zusätzlich als elektronische Geldbörse verwendet wird, nach Abbuchung des Geldbetrags vom Kundenmedium, nach erfolgter Erfassung des Kundenmediums von zumindest einer einem Automaten zugeordneten Leseeinrichtung durchgeführt wird.

6. Verfahren zur Bereitstellung von standortbezogenen Dienstleistungen nach Anspruch 1, 2 oder 3, **dadurch gekennzeichnet, dass** nach erfolgter Erfassung des Kundenmediums von zumindest einer einer ortsfest angeordneten Kamera zugeordneten Leseeinrichtung und bei gültiger Berechtigung zur Beanspruchung der Dienstleistung oder für den Fall, dass das Kundenmedium zusätzlich als elektronische Geldbörse verwendet wird, nach Abbuchung des Geldbetrags vom Kundenmedium die ortsfest angeordnete Kamera aktiviert wird, um ein Foto der dem Kundenmedium zugeordneten Person vor einem vorgegebenen Hintergrund zu machen, wobei dieses Foto in digitaler Form über die zumindest eine der Kamera zugeordnete Leseeinrichtung an das Kundenmedium geschickt oder auf einem Server zentral abgelegt wird.

7. Verfahren zur Bereitstellung von standortbezogenen Dienstleistungen nach einem der vorangehenden Ansprüche, **dadurch gekennzeichnet, dass** die Lokalisierung des Kundenmediums anhand der Signalstärke, mit der die zumindest eine Leseeinrichtung die Medieninformation empfangen hat und/oder anhand der Laufzeit von Daten zwischen Kundenmedium und der zumindest einen Leseeinrichtung ermittelt wird.

8. Verfahren zur Bereitstellung von standortbezogenen Dienstleistungen nach einem der vorangehenden Ansprüche, **dadurch gekennzeichnet, dass** sich zu Beginn des Verfahrens das Kundenmedium außerhalb der Reichweite der zumindest einen Leseeinrichtung in einem "Sleep"-Modus befindet, wobei im Sleep-Modus im Wesentlichen keine elektrische Aktivität stattfindet, wodurch für den Fall einer eigenen Energieversorgung des Kundenmediums die Batterie, welche das Kundenmedium mit Energie versorgt, nicht belastet wird, wobei die zumindest eine Leseeinrichtung in regelmäßigen Intervallen im Rahmen einer Aufweck-Phase ein "Wake-up"-Signal sendet, wobei, wenn das Kundenmedium dieses Signal empfängt, dies bei einem als gültig erkannten "Wake-up" - Signal zur Aktivierung des Kundenmediums und Übergang in einen Aktiv-Modus führt, wobei anschließend vom Kundenmedium Daten zur Berechnung einer Session-ID gesendet werden, welche von der zumindest einen Leseeinrichtung empfangen und an den Rechner gesendet werden, wobei das Kundenmedium eine Medieninformation sendet, welche über zumindest eine Leseeinrichtung empfangen und mit der Leseeinrichtungs-ID und der Signalstärke, mit der das Signal von der Leseeinrichtung empfangen worden ist und/oder der Laufzeit der Daten zwischen Kundenmedium und der zumindest einen Leseeinrichtung ergänzt und an den mit der zumindest einen Leseeinrichtung verbundenen Rechner weitergeleitet wird, wobei die Medieninformation im Rechner verarbeitet wird und für den Fall einer vorliegenden Berechtigung zur Beanspruchung der standortbezogenen Dienstleistungen, diese zur Verfügung gestellt werden, wobei nach erfolgter Auswertung der Medieninformation eine Bestätigung enthaltend einen Zeitstempel und eine vorgegebene Dauer bis zur nächsten Kontaktaufnahme nach dem Übergang in einen Ruhemodus zum Senden der Medieninformation an den Rechner über die zumindest eine Leseeinrichtung ausgesendet wird, wobei anschließend das Kundenmedium für die vorgegebene Dauer in einen Ruhemodus, bei dem nur der Mikroprozessor des Kundenmediums aktiv ist, um den Übergang in den "Sleep"-Modus oder in den Aktiv-Modus zu steuern, versetzt wird, wobei der Wechsel in den Ruhe-Modus entweder sofort nach Erhalt der Bestätigung, nach einer vorgegebenen Zeitspanne, die im Signal enthaltend die Bestätigung enthalten ist, nach erfolgter Übertragung von standortbezogenen Informationen, nach der Beendigung der Beanspruchung der Dienstleistungen oder nach einem erneuten Signal nach der Beendigung der Beanspruchung der Dienstleistungen erfolgt, wobei nach der vorgegebenen Dauer bis zur nächsten Kontaktaufnahme nach dem Übergang in den Ruhemodus das Kundenmedium in den Aktiv-Modus übergeht und seine Medieninformation an den Rechner über zumindest eine Leseeinrichtung sendet, um eine erneute Lokalisierung zu ermöglichen und wobei sich die Schritte des Sendens einer Bestätigung seitens des Rechners, enthaltend einen Zeitstempel und eine vorgegebene Dauer bis zur nächsten Kontaktaufnahme nach dem Übergang in einen Ruhemodus zum Senden der Medieninformation an den Rechner und des Sendens der Medieninformation seitens des Kundenmediums nach der vorgegebenen Dauer bis zur nächsten Kontaktaufnahme nach dem Übergang in den Ruhemodus so lange wiederholen, bis das Kundenmedium in den Sleep-Modus übergeht, was dann erfolgt, wenn es dem Kundenmedium nach einer vorgegebenen Anzahl von Versuchen nicht gelingt, eine Bestätigung auf das Aussenden der Medieninformation von dem Rechner über zumindest eine Leseeinrichtung zu erhalten.

9. Verfahren zur Bereitstellung von standortbezogenen Dienstleistungen nach Anspruch 8, **dadurch gekennzeichnet, dass** an Ausgängen von räumlich abgegrenzten Orten innerhalb des Ortes in dem die standortspezifischen Dienstleistungen zur Verfügung gestellt werden oder an Eingängen von räumlich abgegrenzten Orten innerhalb des Ortes, in dem die standortspezifischen Dienstleistungen zur Verfügung gestellt werden, in denen keine standortspezifischen Dienstleistungen angeboten werden, zumindest eine Leseeinrichtung angeordnet ist, wobei wenn eine derartige Leseeinrichtung die Medieninformation vom Kundenmedium erhält, vom System an das Kundenmedium ein Befehl gesendet wird, der das Kundenmedium für eine zweite vorgegebene Zeit in den Ruhemodus versetzt, die einer durchschnittlichen Aufenthaltsdauer außerhalb der räumlich abgegrenzten Orte , in denen die standortspezifischen Dienstleistungen zur Verfügung gestellt werden bzw. der durchschnittlichen Aufenthaltsdauer in den Orten, in denen keine standortspezifischen Dienstleistungen angeboten werden, entspricht.

10. Verfahren zur Bereitstellung von standortbezogenen Dienstleistungen nach Anspruch 8 oder 9, **dadurch gekennzeichnet, dass** an Ausgängen des Ortes, in dem die standortspezifischen Dienstleistungen angeboten werden, zumindest eine Leseeinrichtung angeordnet ist, welche nach Erhalt der Medieninformation vom Kundenmedium, einen vom System generierten Befehl an das Kundenmedium sendet, der das Kundenmedium in den "Sleep" - Modus versetzt, um auf diese Weise den Energieverbrauch des Kundenmediums zu reduzieren.

11. Verfahren zur Bereitstellung von standortbezogenen Dienstleistungen nach Anspruch 8, 9 oder 10, **dadurch gekennzeichnet, dass** nach dem Senden der Daten zur Berechnung einer Session-ID vom Kundenmedium eine Authentifizierung zwischen dem Rechner und dem Kundenmedium durchgeführt wird, so dass dieses Kundenmedium als bekannt und authentifiziert markiert ist, wobei bei einem Übergang vom Aktiv-Modus in den Ruhe-Modus die erfolgte Authentifizierung nicht gelöscht wird, wobei die Authentifizierung bei einem Übergang in den Sleep-Modus gelöscht wird, wobei, wenn das Kundenmedium in den Sleep-Modus übergegangen ist, es nur mit einem erneuten Wake-Up-Signal und anschließender erneuter gegenseitiger Authentifizierung erfasst und registriert werden kann.

12. Verfahren zur Bereitstellung von standortbezogenen Dienstleistungen nach Anspruch 11, **dadurch gekennzeichnet, dass** nach Abschluss der gegenseitigen Authentifizierung die Kommunikation zwischen der On-Board-Unit und dem Kundenmedium verschlüsselt und optional signiert erfolgt, wobei die Verschlüsselung und Signatur für jedes Kundenmedium unterschiedlich ist und wobei nach einer erneuten Authentifizierung die erneute Registrierung eine erneute, unterschiedliche Verschlüsselung und ggf. Signierung aufweist.

13. System zur Bereitstellung von standortbezogenen Dienstleistungen, insbesondere zur Durchführung des Verfahrens nach einem der vorangehenden Ansprüche, **dadurch gekennzeichnet, dass** es zumindest eine einem Standort zugeordnete und mit einem Rechner verbundene Leseeinrichtung und Kundenmedien umfasst, die mit dem Rechner über die zumindest eine Leseeinrichtung in einem vorgegebenen Frequenzbereich kommunizieren, wobei das Kundenmedium eine erste und eine zweite Antenne zur langreichweitigen Daten-Kommunikation, einen integrierten Schaltkreis umfassend zumindest eine crypto-engine, einen mit dem integrierten Schaltkreis verbundenen oder in den integrierten Schaltkreis integrierten Mikroprozessor, einen Operationsverstärker und einen mit der zweiten Antenne verbundenen RF-Tranceiver umfasst, wobei die erste Antenne als Wake-up-Antenne zum Empfangen eines amplitudenmodulierten Wake-up-Signals dient, wenn sich das Kundenmedium in einem "Sleep"-Modus befindet, wobei das von der Wake-up-Antenne empfangene Signal von dem als Wake-up-Erfassungsmodul dienenden Operationsverstärker demoduliert und verstärkt wird und von dem im "Sleep-Modus" teilweise aktivierten Mikroprozessor ausgewertet wird und wobei für den Fall eines als gültig erkannten Wake-up-Signals der Mikroprozessor vollständig eingeschaltet wird, wodurch das Kundenmedium in den Aktiv-Modus übergeht und wobei der Operationsverstärker die einzige Komponente des Kundenmediums ist, die im "Sleep"- Modus vollständig aktiv ist, wobei das Kundenmedium einen Ruhe-Modus aufweist, bei dem nur der Mikroprozessor aktiv ist, um den Übergang in den "Sleep"-Modus oder in den Aktiv-Modus gemäß vorgegebener Routinen zu steuern, wobei im "Sleep"-Modus nur der Operationsverstärker und ein Teil des Mikroprozessors aktiviert sind, wobei der Mikroprozessor im Ruhe- und Aktiv-Modus eingeschaltet ist und wobei der Tranceiver im "Sleep"- und im Ruhe-Modus ausgeschaltet und lediglich im Aktiv- Modus eingeschaltet ist, wodurch der Energieverbrauch des Kundenmediums minimiert wird.

14. System zur Bereitstellung von standortbezogenen Dienstleistungen nach Anspruch 13, **dadurch gekennzeichnet, dass** das Kundenmedium als aktives Kundenmedium ausgeführt ist, wobei es zur Stromversorgung der Komponenten eine Batterie umfasst.

15. System zur Bereitstellung von standortbezogenen Dienstleistungen nach Anspruch 13, **dadurch gekennzeichnet, dass** das Kundenmedium derart ausgeführt ist, dass es über einen HF-Puls mit Energie geladen wird und anschließend für eine vorgegebene Zeit autark arbeiten kann.

16. System zur Bereitstellung von standortbezogenen Dienstleistungen nach Anspruch 13, 14 oder 15, **dadurch gekennzeichnet, dass** das Kundenmedium mit einem als Datenaus- und -eingabegerät dienenden Gerät verbindbar ist, wobei das Kundenmedium in oder am Gerät anordenbar ist oder mit dem Gerät berührungslos verbindbar ist.
